Europäisches Patentamt

European Patent Office

Office européen des brevets

(19)

(11) **EP 1 072 922 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.⁷: **G02B 17/08**, G02B 27/00

(21) Anmeldenummer: **99102937.2**

(22) Anmeldetag: **13.02.1999**

(54) **Teleskop mit einer Korrektur von optischen Wellenfrontfehlern**

Telescope with a correction of optical wavefront abberations

Téléscope avec une correction d'aberrations de surface d'onde

(84) Benannte Vertragsstaaten:
**CH DE ES FR GB IT LI SE**

(43) Veröffentlichungstag der Anmeldung:
**31.01.2001 Patentblatt 2001/05**

(73) Patentinhaber: **Leica Geosystems AG
9435 Heerbrugg (CH)**

(72) Erfinder:
- **Braunecker, Bernhard, Dr.
  9445 Rebstein (CH)**
- **Biber, Massimo
  9436 Bulgach (CH)**

(74) Vertreter: **Kaminski, Susanne et al
Büchel, Kaminski & Partner
Patentanwälte Est.
Austrasse 79
9490 Vaduz (LI)**

(56) Entgegenhaltungen:
WO-A-88/05553          GB-A- 2 283 107
US-A- 2 336 379        US-A- 2 344 756
US-A- 5 274 406        US-A- 5 309 276
US-A- 5 392 119

- GREVE A: "Off-Axis Aberration of Achromatic Schmidt Correctors" OPTIK., Bd. 50, Nr. 3, 1978, Seiten 235-242, XP002098285 STUTTGART DE
- MARTIN L C: "Technical Optics" 1950 , SIR ISSAC PITMAN & SONS , LONDON XP002098287 The Schmidt Camera * Seite 309 - Seite 316 *
- ABEL IRVING R ET AL: "Wide-Field Correction in Reflective Schmidt Systems by a nonrotationally Symmetric Element" PROCEEDINGS OF THE SPIE, Bd. 399, 19. - 22. April 1983, Seiten 232-238, XP002098286 Geneva, CH
- TRILLER A: "DER SCHMIDTSPIEGEL EIN INTERESSANTES OPTISCHES PROBLEM" F & M. FEINWERKTECHNIK MIKROTECHNIK MESSTECHNIK, Bd. 100, Nr. 10, 1. Oktober 1992 (1992-10-01), Seiten 455-458, XP000315517
- BOTTEMA M: "REFLECTIVE CORRECTORS FOR THE HUBBLE SPACE TELESCOPE AXIAL INSTRUMENTS" APPLIED OPTICS, Bd. 32, Nr. 10, 1. April 1993 (1993-04-01), Seiten 1768-1774, XP000356623

**Beschreibung**

Die Erfindung bezieht sich auf ein Teleskop mit den Oberbegriffsmerkmalen des Anspruchs 1.

In der Optik hat man es oft mit punktförmigen Objekten zu tun. Das klassische Beispiel ist die Astronomie, wo man mit Teleskopen nahezu punktförmige Sternbilder registriert. Ein anderes, modernes Beispiel ist die optische Verbindung zweier Satelliten zum Zwekke des Datenaustausches. Jeder Satellit sendet Laserlicht verschiedener Wellenlänge zu einem oder mehreren Gegensatelliten. Ist die Intensität des Lichtes mit der zu übertragenden Datensequenz moduliert, spricht man vom Kommunikationsmodus; senden beide Satelliten Laserlicht aus, um sich zu 'finden', spricht man vom Akquisitionsmodus. Bei beiden Betriebsarten erscheint wegen der grossen Distanzen, (-bis zu 70 000 km im geostationären Orbit-) der jeweilige Gegensatellit nahezu punktförmig dem anderen Satelliten.

In beiden Fällen muss die empfangende Optik sehr geringe Lichtleistungen verarbeiten. Die optischen Systeme müssen daher in erster Linie lichtstark sein. Bei punktförmigen Objekten ist nun die Bestrahlungsstärke b am Ort des Empfängers gegeben durch

$$b \equiv W / A \approx D^2 * \sin^2 (\delta), \qquad (1)$$

wobei W die einfallende Strahlungsleistung, A die Fläche des Beugungsscheibchens, D der Durchmesser der Eintrittspupille, und $\delta$ der Öffnungswinkel des Teleskops ist (R.W.Pohl, Einführung in die Physik, Band 3, Seite 64). Man nennt $\sin(\delta)$ die numerische Apertur NA des Teleskops, die man unter Verwendung der Brennweite F aus der F-Zahl

$$F_\# \equiv F / D \qquad (2)$$

gemäss der Beziehung

$$NA = 1 /(2*F_\#) \qquad (3)$$

ableitet. Lichtstarke Systeme für quasi-punktförmige Objekte zeichnen sich somit entweder durch einen grossen Durchmesser D oder durch eine grosse numerische Apertur NA oder durch beides aus.

In der Astronomie geht man den Weg, D sehr gross zu wählen. Bekannt sind die grossen 8 m - Teleskope von Mount Palomar und anderer astronomischer Zentren. Aus Gründen der technischen Machbarkeit muss man zwar die numerische Apertur klein halten, aber der Gewinn an Lichtstärke ist doch beträchtlich. Wegen der kleinen numerischen Apertur wird gemäss (3) die Brennweite entsprechend vergrössert und damit auch die Teleskopdimensionen. Man kann ab einem gewissen Durchmesser - typischerweise ab 30 cm - dann nur noch Spiegelsysteme verwenden, da Linsensysteme nicht mehr sinnvoll herstellbar sind.

Der zweite grosse Vorteil von reflektierenden Spiegelsystemen gegenüber optisch brechenden Linsensystemen liegt in ihrer Farbfehlerfreiheit. Ein optisch auskorrigiertes Spiegelsystem ist somit sowohl im UV-Bereich, als auch weit im InfrarotBereich einsetzbar, was besonders für die Astronomie von entscheidender Bedeutung ist.

Nachteilig hingegen ist bei Spiegeln das kleine Gesichtsfeld von nur wenigen Grad, während Linsensysteme wiederum extrem weitwinklig ausgelegt sein können (siehe Fisheye-Systeme mit Gesichtsfeldern > 180°). In der Astronomie löst man diesen Nachteil elegant, aber sehr aufwendig durch riesige mechanische Nachführeinheiten, um ein grosses celestrisches Gesichtsfeld zu erreichen.

Historisch - und auch heute noch die Regel - stellt man Linsen und Spiegel in sphärischer Flächenform dar; ein über die Jahrhunderte hinweg ausgereiftes Herstellverfahren. Hat man - wie in einem Teleskop - mehrere sphärische Spiegel hintereinander zu plazieren, so sollten diese eine gemeinsame optische Symmetrieachse besitzen ('on-axis'-Anordnung). Ist dies nicht der Fall, kann es zu Einbussen der Abbildungsqualität kommen. Im 'on-axis'-Betrieb hat man allerdings das Problem der inneren Abschattung (Obskuration), die einerseits zu Lichtverlusten und anderseits - oft schlimmer - zu störenden Beugungsartefakten führen. Beugungsartefakte verschlechtern die Bildqualität bei abbildenden Teleskopen, während sie im Falle von Raumteleskopen zu einer unerwünschten Strahlaufweitung und somit zu kritischen Energieverlusten am Gegensatellit führen.

Die Abschattung lässt sich jedoch vermeiden, wenn man die Spiegel 'off-axis' betreibt. Man fertigt deshalb zuerst einen normalen, rotationssysmmetrischen 'Parent'-Spiegel an, benutzt davon aber nur einen, von der optischen Achse entfernt liegenden, meist runden Ausschnitt. Allerdings resultiert daraus eine Bildverschlechterung, die zu kompensieren auch Aufgabe der vorliegenden Erfindung ist.

Asphärische Spiegel sind schwerer herzustellen als sphärische Spiegel. Für sehr hohe Qualitätsanforderungen sind jedoch aphärische Spiegel unabdingbar. Bei Asphären unterscheidet man zwischen 'konischen' Spiegeln wie Rotationsparaboloide, - ellipsoide oder -hyperboloide und komplexeren, nicht-konischen Asphären. Der Schwierigkeitsgrad nimmt bei letzteren stark zu; besonders bei Spiegeln grossen Durchmessers und kleiner F-Zahl. Ab F-Zahlen kleiner 2 werden zudem sehr hohe Ansprüche an die Mess- und Prüfmittel gestellt.

In der Satellitenkommunikation ist die Situation völlig anders als in der Astronomie. Hier müssen in erster Linie die Teleskopdimensionen und das Gewicht minimiert werden, im wesentlichen sie für die hohen Kosten verantwortlich sind. Satellitenoptik besteht deshalb vorwiegend aus Systemen kleinerer Dimension. Man wählt Spiegel, da diese in hochentwickelter Leichtbauweise ein signifikant geringeres Gewicht aufweisen können als optisch gleichwertige Linsensysteme. Linsensysteme sind zudem für die Raumfahrt höchst problematisch, da aufwendige Schutzvorkehrungen gegen Glastrübungen in den Linsen getroffen werden müssen, die durch die hochenergetische Höhenstrahlung verursacht werden.

Ein weiterer Vorteil von Spiegelsystemen ist, dass das beanspruchte Volumen minimiert werden kann, wenn man die Spiegelanordnung entsprechend geschickt "verschachtelt". Verschachtelungen sind jedoch bereits eine Notwendigkeit bei den oben beschriebenen "off-axis"-Systemen, aber sie bringen noch weitere Vorteile: Zum einen wird durch eine kompakte Anordnung das optische System thermisch stabiler. Da Satelliten extremen Temperaturdifferenzen ausgesetzt sind, gilt die Konstruktionsregel: je kleiner die Dimension, desto geringer sind die, durch die thermische Ausdehnung der mechanischen Struktur verursachten Defokussierungen der Optik. Defokussierung bereits von einigen μm können zu nicht-akzeptablen Wellenfrontdeformationen führen.

Konstrukteure müssen weiter die Eigenvibrationen des Satelliten minimieren. Ein vibrierender Satellit verschlechtert dramatisch die "Pointing"-Stabilität der optischen Verbindung: Man versteht hierunter, dass Vibrationen aufgrund der grossen Distanzen Intensitätsschwankungen am Ort des Gegensatellits verursachen. Intensitätsschwankungen wiederum beeinflussen die Fehlerrate der Datenübertragung (Bit Error Rate) und müssen durch eine unerwünschte Verringerung der Datenrate kompensiert werden. Die Ursache der Vibrationen liegt im Fehlen eines mechanischen Fixpunktes im Orbit. So muss jeder neuen Ausrichtung des Satelliten mechanisch gegengeregelt werden, es muss also aktiv gedämpft werden. Das führt zu Regelabläufen, die, insbesondere in der Nähe von Eigenfrequenzen der Struktur, sehr kompliziert werden. Auch hier gilt deshalb: je kleiner die Baugrösse, um so leichter die Stabilisierung. Wie kritisch Vibrationen bewertet werden, ist aus der Toleranzgebung für die Pointingstabilität von typischerweise 50 nanorad, also dem Hundertstel einer Bogensekunde (!!), ersichtlich.

Um nun genügend optische Leistung zum Gegensatellit zu übertragen, hat man trotz der kleinen Spiegeldurchmesser zwei Möglichkeiten: man benutzt starke Laserlichtquellen und man erhöht gemäss (1) die numerische Apertur NA des Teleskops.

Eine grosse NA ist dabei fast immer notwendig, da neben der reinen Kommunikation und Akquisition mit gut kollimiertem Laserlicht viele Satelliten auch optisch passiv, also quasi - astronomisch "arbeiten" müssen. So registriert ein Satellit permanent ausgewählte Sternbilder, nach denen er sich räumlich orientiert, wenn er im sogenannten 'Pointing'-Modus in eine neue Position gebracht werden muss. Aus Sicherheits- und Kostengründen benutzt man aber die selbe Teleskop-Optik für den Kommunikations-, Akquisitions- und 'Pointing'-Kanal.

Folgende Betriebsarten werden somit von einem modernen Raumteleskop durchgeführt:

Die optische Kommunikation erfolgt bei 1064 nm im bidirektionalen 'Sende & Empfangs'-Modus, bei kleinem Gesichtsfeld, z.B. von 0,1°, sehr hoher Wellenfrontqualität ($<\lambda/30$ rms) und hoher Datenrate (> 10 Gbyte/ sec). Die optische Akquisition wird bei (800-900 nm) im ebenfalls bidirektionalen 'Sende & Empfangs'-Modus, mit relativ grossem Gesichtsfeld von 3°, normal guter Wellenfrontqualität ($<\lambda/10$ rms) und mit mittlerer Datenrate (50-100 Kbyte/sec) durchgeführt. Schliesslich wird das sogenannte optische 'Pointing' in passiver 'Empfangs'-Betriebsweise, ebenfalls mit grossem Gesichtsfeld von 3° und normal guter Wellenfrontqualität ($<\lambda/10$ rms), aber mit breiter spektraler Korrektur (500-1000 nm) durchgeführt.

Das heisst, dass Spiegelsysteme für Raumanwendungen im Kommunikationsbereich von relativ kleinem Durchmesser (200-300 mm) und grosser numerischen Apertur sind. Sie müssen aus Gewichts- und Stabilitätsgründen mechanisch hoch komplex verschachtelt sein. Die optische Qualität muss für den Kommunikations-, Akquisitions- und 'Pointing'-Kanal sehr gut, also beugungslimitiert sein.

Ein derartiges optisches System bzw. Teleskop ist beispielsweise aus der U.S. Patentschrift Nr. 5,309,276 bekannt. Das Teleskop ist hierin sehr allgemein beschrieben, ohne die anspruchsvollen Erfordernisse der Praxis, insbesondere der Raumfahrt zu berücksichtigen.

Zum einen ist der Platzbedarf relativ gross, da der Primärund der Sekundärspiegel eine gemeinsame optische Achse besitzen, also im Sinne obiger Ausführung nicht optimal gefaltet sind. Um trotzdem für ein gewisses Gesichtsfeld die Strahlenbündel ohne Beschneidung vom Primär- zum Sekundärspiegel zu leiten, muss der Sekundärspiegel relativ weit entfernt vom Primärspiegel sein. Dies ist, wie oben erwähnt, ungünstig, wenn man mit grossen Temperaturvariationen im Betriebsmodus rechnen muss. Weiter wird dadurch die ungenützte zentrale Zone des 'off-axis'- betriebenen Primärspiegels unnötig vergrössert, was einen grossen Durchmesser des 'Parent'-Spiegels erfordert. Um trotzdem die Dimension des Teleskops zu reduzieren, wurde der 'Parent'-Spiegel' mit einer F-Zahl ≈ 1 ausgelegt. Dies lässt sich in der Praxis bei der angegebenen Grösse der Durchmesser nur unter sehr hohem Aufwand verwirklichen wegen der sehr engen Fertigungstoleranzen. Bei dieser F-Zahl werden zudem sehr hohe Ansprüche an die Prüftechnik gestellt.

In der Schrift wird auch vermerkt, dass im Falle einer ungenügenden Wellenfrontqualität alle Spiegel höher als konisch asphärisiert werden können. Nur ist dies bei grossen Spiegeln eine teurere und technisch sehr unsichere Variante.

Als nachteilig wird weiter empfunden, dass der kleine Spiegel M3 nur bei einer afokalen Vergrösserung Γ=6.5 plan gehalten werden kann. Bei anderen Vergrösserungen muss er konkav oder konvex gestaltet werden, was zum einen nochmals die Kosten vergrössert, zum anderen aber auch die Justierung des Gesamtsystems kompliziert.

Fasst man all die Nachteile zusammen, erweist sich die vorliegende Variante als nicht optimierte, unflexible, empfindliche und teure Lösung. Sie ist in dieser Form deshalb nicht für die Praxis geeignet.

Die Aufgabe der vorliegenden Erfindung ist, diese Restriktionen zu überwinden und den Bau von kompakten, lichtstarken, weitwinkligen und obskurationsfreien Systemen praxisgerecht zu ermöglichen. Es soll eine optische Lösung gefunden werden, die die oben genannten, anspruchsvollen, zum Teil sich widersprechenden Forderungen erfüllt. Es wird gezeigt, dass dies erfindungsgemäss mittels einer einzigen Korrekturfläche in stabiler und kostengünstiger Weise durchgeführt werden kann.

Der Erfindung liegt demnach zunächst die Aufgabe zugrunde, ein Teleskop als ein optisches System, anzugeben, das in einfacher Weise korrigiert ist, bzw. ein Teleskop, das mit deutlich geringeren Dimensionen, geringerem Gewicht und geringeren Kosten auch praxisgerecht ist. Dies gelingt in überraschend einfacher Weise durch die kennzeichnenden Merkmale des Anspruchs 1.

Mit einem Teleskop nach Anspruch 1 ist eine optimale Korrektur sogar möglich, wenn, wie im Falle von Raumteleskopen, der einwandfreie Betrieb gleichzeitig in mehreren optischen Kanälen erforderlich ist. Wie oben erwähnt, sind die optischen Ansprüche für die Kommunikation anders als für die Akquisition und für das 'Pointing'. Trotzdem ist es auf die erfindungsgemässe Weise leicht möglich, eine Korrektur mittels einer einzigen Korrekturfläche simultan durchzuführen, was bisher nur unter Eingehung von Kompromissen möglich war.

Eine der Erfindung zugrundeliegende Aufgabe wird zunächst durch Inkaufnahme eines optischen Fehlers gelöst, der wieder behoben wird, so dass letztlich nur die Vorteile der ersteren Massnahme erhalten bleiben. Darüber hinaus hat sich ein anfänglich nicht erwarteter Zusatzeffekt ergeben, dass nämlich der dritte Reflektor auch bei afokalen Vergrösserungen plan gehalten werden kann, die grösser sind als 6.5. Natürlich trägt dies zur Kostenreduktion und zur Vereinfachung der Herstellung bedeutend bei.

Mit dem für die Herstellung einer Korrektur in einem solchen Teleskop erarbeiteten Verfahren sind auch grundsätzlich eine Reihe von Fehlern behebbar, die die Wellenfront verschlechtern. So können Restaberrationsfehler des Designs, hervorgerufen durch die Form, Lage und Verkippungen der off-axis -Asphären, eliminiert werden. Weiter ist es möglich und in der Praxis auch erforderlich, verbleibende Polier-und Montagefehler der optischen Komponenten zu kompensieren.

Es hat sich gezeigt, dass eine Verkippung des ersten Reflektors um die im Anspruch 2 angegebenen Winkel den Asymmetriefehler in beherrschbaren Grenzen zu halten vermag, weshalb eine solche Verkippung bevorzugt ist. Es ist wiederum überraschend, dass bereits eine relativ kleine Verkippung von beispielsweise 1°, bei der also die Asymmetriefehler sehr gering sind, die eingangs erwähnten Vorteile zu erbringen vermag, und es ist daher sicher kein kleines Verdienst der vorliegenden Erfindung, dies erkannt zu haben. Schon eine Verkippung von beispielsweise 30 Bogensekunden kann eine deutliche Verbesserung bringen.

Bevorzugt erfolgt die Korrektur - entsprechend Anspruch 3 - am dritten Reflektor, weil dieser im allgemeinen kleiner als der erste und der vierte Reflektor sein und optisch auch weniger empfindlich sein wird, sowie nahe der Zwischenbildebene und nicht zu weit von der Pupillenebene entfernt liegt. Damit kann er sowohl zur Korrektur von Bildebenenfehlern, als auch zur Korrektur von Pupillenfehlern benutzt werden. Dazu kommt, dass der dritte Reflektor bei erfindungsgemässer Ausbildung plan sein kann.

Wie man einen Asymmetriefehler in der Praxis behebt, liegt an sich im Können eines Durchschnittsfachmannes auf diesem Gebiet. Bevorzugt ist jedoch eine Vorgangsweise entsprechend Anspruch 1 mit einem Polynomansatz.

Es wurde oben am Stande der Technik kritisiert, dass die 'Parent'-Spiegel eine F-Zahl von 1 haben. Bei der Erfindung lassen sich die Massnahmen nach den Ansprüchen 4 und/oder 5 besonders leicht verwirklichen.

Zur Begrenzung des Asymmetriefehlers ist es günstig, wenn die Merkmale des Anspruches 6 verwirklicht sind.

Dazu werden der erste, zweite und vierte Reflektor so berechnet, dass ihre 'Parent'-Spiegel die herstellungsmässig noch vertretbare F-Zahl von 1.5 nicht unterschreiten.

Die 'off-axis' betriebenen Reflektoren (der erste, zweite und vierte Reflektor) werden gegeneinander verkippt. Dadurch kommt man zum einen zu einem kompakten Bauvolumen, zum anderen vermag man die durch den 'off-axis'-Modus eingeführten Wellenfrontfehler bereits partiell kompensieren.

Die verbleibenden Fehler werden durch die asphärische Formgebung der Spiegelflächen korrigiert. Dabei werden wiederum aus Gründen der erleichterten Machbarkeit die drei grossen Spiegel-Reflektoren (der erste, zweite und vierte Reflektor) als rein konische Spiegel ausgelegt, während der dritte Reflektor als reiner Planspiegel konzipiert wird. Aus Flexibilitätsgründen soll dies für einen grossen afokalen Verstärkungsbereich Γ = 4...15 gelten. Der Planspiegel (der dritte Reflektor) kann erfindungsgemäss eine oberflächenstrukturierte, reflektierende Phasenplatte aufweisen, mit der die endgültige Feinkorrektur der optischen Wellenfront erreicht wird. Die Phasenplatte kann auch als transmittierende Glasplatte nahe dem dritten Reflektor eingebracht werden.

Die Herstellung einer derart strukturierten Platte wird durch neue technische Möglichkeiten der maschinellen Flächenbearbeitung ermöglicht, um Spiegeloberflächen mit beliebigem Tiefenprofil in optischer Qualität zu polieren und zu vermessen.

Sie kann aber auch als beugendes Element in Form eines Hologramms gestaltet werden. Das Hologramm kann dann auf den plane Fläche des dritten Reflektorelements aufgekittet werden.

Durch die Bereitstellung zusätzlicher Freiheitsgrade der gegenseitigen Verkippung und der Phasenkorrekturplatte lassen sich für einen grossen Bereich der afokalen Vergrösserung Lösungen finden, die die Wellenfrontqualität signifikant verbessern. All diese Lösungen genügen dabei der technisch wichtigen Randbedingung, dass die Austrittspupille AP ausserhalb des Teleskops mechanisch zugänglich ist.

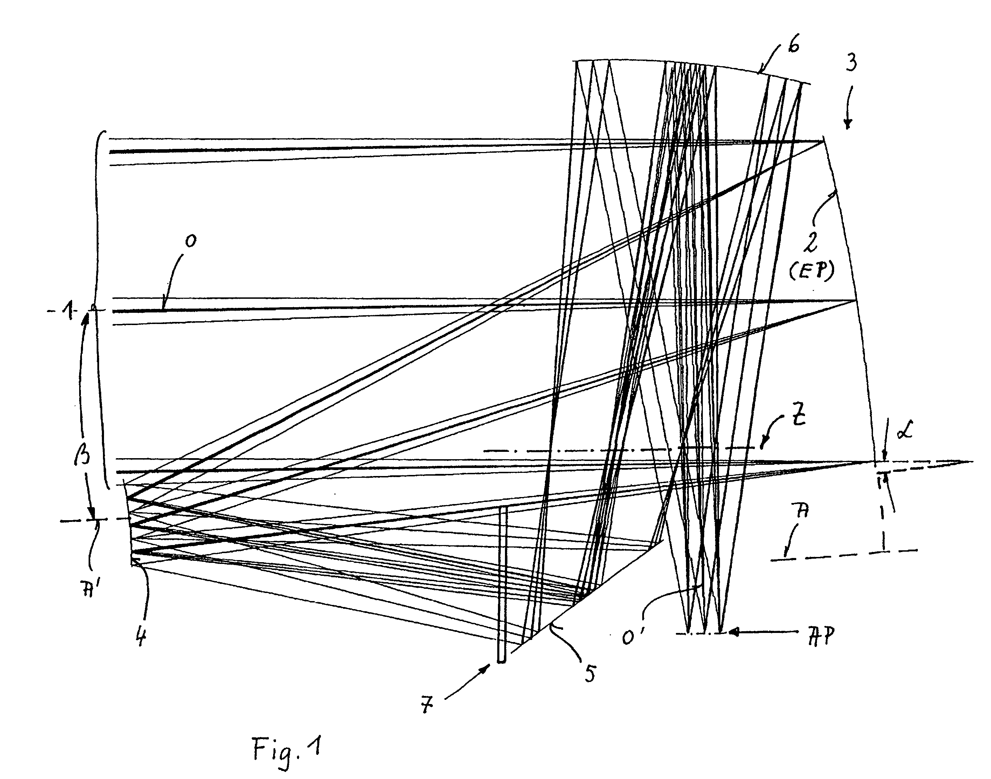

Weitere Einzelheiten der Erfindung ergeben sich an Hand der nachfolgenden Beschreibung von in der Zeichnung schematisch dargestellten Ausführungsbeispielen. Dabei werden anhand der Figuren 1 bis 8 beispielhaft die Korrekturmassnahmen mittels Korrekturplatte und anhand der Figuren 9 bis 15 mittels Korrekturmassnahmen an einem Reflexionselement dargestellt. Es zeigen:

Fig. 1 ein Ausführungsbeispiel für den Aufbau eines erfindungsgemässen optischen Systems eines Teleskops mit einer nahe dem dritten Reflektor angeordneten Korrekturplatte;

Fig. 2 die Wellenfrontdeformation, ausgedrückt in Einheiten der Wellenlänge λ, in der Austrittspupille AP des unkorrigierten Systems von Fig. 1 für ein grösseres Gesichtsfeld (gegebenenfalls im Akquisitionskanal) in x und y - Richtung für verschiedene Feldwinkel und Wellenlängen;

Fig. 3 wie Fig. 2, allerdings für das erfindungsgemäss mittels Korrekturplatte korrigierte System;

Fig. 4 eine der Fig. 2 entsprechende Darstellung für ein kleineres Gesichtsfeld (gegebenenfalls im Kommunikationskanal);

Fig. 5 wie Fig. 4, allerdings für das erfindungsgemäss mittels Korrekturplatte korrigierte System;

Fig. 6 das Oberflächenprofil Δz der Korrekturplatte in z-Blickrichtung;

Fig. 7 eine Darstellung des Oberflächenprofils Δz der Korrekturplatte in perspektivischer, stark überhöhter Darstellung;

Fig. 8 die Phasenfunktion für eine ein Hologramm aufweisende Korrekturplatte, die eine der Fig. 3 bzw. 5 entsprechende Korrektur bewirkt;

Fig. 9 ähnlich Fig. 2, die Wellenfrontdeformation in der Austrittspupille des unkorrigierten Systems für ein grösseres Gesichtsfeld (Akquisitionskanal), jedoch für ein System mit geringerer Vergrösserung;

Fig. 10 wie Fig. 9, allerdings für das erfindungsgemäss mittels Korrekturmassnahmen am dritten Reflektor korrigierte System;

Fig. 11 eine der Fig. 9 entsprechende Darstellung für ein kleineres Gesichtsfeld (Kommunikationskanal);

Fig. 12 wie Fig. 10, allerdings für das erfindungsgemäss am dritten Spiegel korrigierte System;

Fig. 13 das Oberflächenprofil Δz in mm der an sich planen Oberfläche des dritten Reflektors in z-Blickrichtung;

Fig. 14 eine Darstellung des Oberflächenprofils Δz des an sich planen, dritten Reflektors in perspektivischer, stark überhöhter Darstellung und

Fig. 15 die Phasenfunktion für eine ein Hologramm aufweisende Oberfläche des dritten Reflektors, durch die eine der Fig. 10 bzw. 12 entsprechende Korrektur bewirkt wird.

Gemäss Fig. 1 fällt ein Strahlenbündel 1 entlang einer optischen Achse O ein und trifft auf die konkave Spiegelfläche 2 eines ersten Reflektors 3, dessen Achse A mit der optischen Achse O einen Winkel α einschliesst. Dies bedeutet natürlich, dass sich ein Asymmetriefehler ergeben muss, denn geht man - bezogen auf Fig. 1 - entlang der Spiegelfläche 2 von oben nach unten, so entfernt sich diese Fläche 2 zunehmend von der Bildebene des einfallenden Strahlenbündels 1. Diese Entfernung kann natürlich sehr klein gehalten werden, wenn der Winkel α sehr klein gehalten wird, und man würde vermuten, dass dann eine solche Verkippung des Reflektors 3 um den Winkel α kaum einen merklichen positiven Effekt hätte. Die nachfolgende Beschreibung wird aber zeigen, dass dem nicht so ist.

Wie beim Stand der Technik reflektiert die Spiegelfläche 2 das Strahlenbündel auf einen zweiten, konvexen Reflektor 4. Es hat sich gezeigt, dass der durch die Verkippung des Reflektors 3 um den Winkel α entstehende Asymmetriefehler schon dadurch gemildert werden kann, wenn auch die Achse A' des zweiten Reflektors 4 zur optischen Achse O einen Winkel β einnimmt, wobei in der Praxis die beiden Winkel α und β zweckmässig gleich gross sind. Es versteht sich, dass das System um so kompakter gebaut werden könnte, je grösser der Winkel α bzw. β ist, doch müssen die dadurch entstehenden Asymmetriefehler auch noch beherrschbar, d.h. leicht korrigierbar sein. Es hat sich gezeigt, dass es sinnvoll ist, die Grösse des Winkels α auf wenigstens 30° zu begrenzen, vorzugsweise auf 10°. Insbesondere sollte er weniger als 5° betragen, also z. B. etwa 1°. Es sei auch erwähnt, dass die F-Zahl des 'Parent'-Spiegels dieses zweiten Reflektors 4 möglichst grösser als 1 und zweckmässig grösser als 1,5 sein sollte, um seine Herstellbarkeit zu vereinfachen. Eine F-Zahl von 2 ± 0,3 wird in der Praxis allen Anforderungen genügen.

Vom zweiten Reflektor 4 wird das Strahlenbündel auf einen dritten Reflektor 5 geworfen, der zusammen mit einem vierten Reflektor 6 eine derartige Umlenkung des Strahlenbündels bewirkt, dass letztlich die Ebene AP der Austrittspupille etwa parallel zur optischen Achse O ausgerichtet ist, d.h., dass die abgelenkte optische Achse O' annähernd unter einem senkrechten Winkel zur optischen Achse O des einfallenden Strahlenbündels 1 liegt. Dies ist besonders für Anwendungen von Bedeutung, bei denen das erfindungsgemässe optische Teleskopsystem (auch als `beugungsbegrenzter Schiefspiegler' zu bezeichnen) in eine theodolitähnliche Struktur eingebaut werden soll. Denn auf diese Weise kann man den Strahl in der Kippachse der Struktur ein- bzw. auskoppeln. Durch die Kombination von konkaver Spiegelfläche 2 und konvexem Reflektor 4 ergibt sich nahe dem dritten Reflektor 5 eine Zwischenbildebene Z.

Im Wege des in Fig. 1 gezeigten Strahlenganges soll und muss nun eine Korrektur für Abbildungsfehler - insbesondere auch für den durch die Verkippung auftretenden Asymmetriefehler - erfolgen. An sich sind dazu verschiedene Möglichkeiten gegeben. Es wurde bereits erwähnt, dass sich durch die Schiefstellung der Achse A und damit der Eintrittspupille EP auf der Fläche 2 Asymmetriefehler der Wellenfront erzeugt werden. Es wäre daher eine erste Möglichkeit, dem Reflektor 3 eine derart asphärische Linse (oder ein entsprechendes optisches Glied) vorzusetzen, um diesen Asymmetriefehler zu korrigieren. Wegen der Grösse der EP ist diese Massnahme allerdings nicht optimal, auch müssten damit andere Fehler in Kauf genommen werden, weshalb eine solche, an sich gegebene, Möglichkeit ebensowenig von Interesse ist, wie eine Korrektur an der Spiegelfläche 2 oder am Reflektor 4. Hingegen ist eine Korrektur im Bereiche des dritten Reflektors 5 optimal, weil dieser im allgemeinen kleiner als der erste und der vierte Reflektor 3 bzw. 6 sein und optisch auch nicht allzu empfindlich sein wird, sowie eine gute Position nahe der Zwischenbildebene Z und nicht zu weit von der Pupillenebene AP hat. Das bedeutet, dass vorteilhaft die später besprochene Korrektur bevorzugt entweder am dritten Reflektor 5 durchgeführt wird, wo die Bearbeitung auf Grund der ermöglichten planen Ausgestaltung besonders einfach sein wird, oder durch Einschalten einer dünnen, planparallelen Korrekturplatte 7 im Bereiche des Reflektors 5.

Es ist bemerkenswert, dass durch die Verkippung um den Winkel α (und gegebenenfalls auch β) nicht nur erreicht wird, dass die optischen Komponenten näher aneinandergerückt werden können, so dass der Aufbau kompakter wird, sondern dass sich daraus eine völlig plane Form des dritten Reflektors 5 ergeben kann, der dann nur eine besondere Oberflächengestaltung aufzuweisen braucht, wenn an ihm die schon genannte Wellenfrontkorrektur durchgeführt werden soll (wie anhand der Figuren 9 bis 15 weiter unten dargelegt ist). Immerhin aber führt natürlich auch diese Ausgestaltung als Planspiegel zu einer Reduzierung der Gesamtkosten. Überdies können die Parent-Reflektoren 3 (konkav) und 4 (konvex) eine grössere F-Zahl als 1 haben. Den nachfolgend beschriebenen Beispielen und Berechnungen liegt eine F-Zahl von 1,7 und ein Verkippungswinkel α von nur 1° zugrunde.

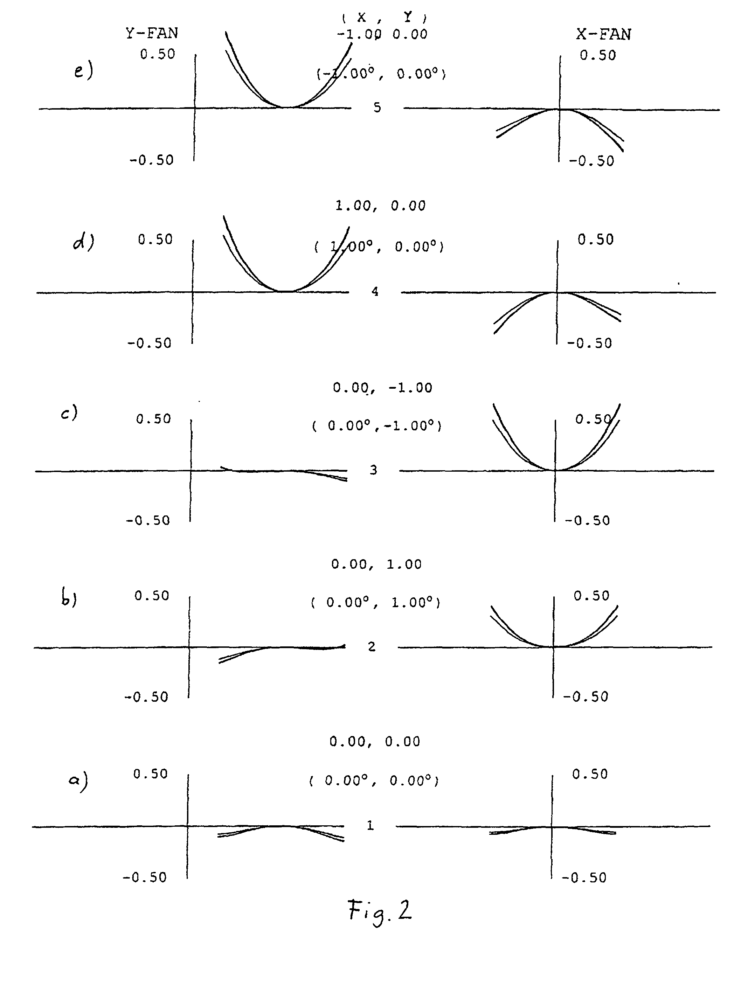

Den Darstellungen der Figuren 2 bis 8 liegt ein System entsprechend Fig. 1 mit einer Vergrösserung Γ ≅ 10 zugrunde.

Betrachtet man nun Fig. 2, so stellt diese ein erstes Beispiel eines Zwischenergebnisses bei Durchführung der Erfindung hinsichtlich der erzielten Wellenfrontqualität dar, nämlich den Effekt der Schiefstellung oder Verkippung der Achse A des ersten Reflektors 3 relativ zur optischen Achse O um einen Winkel α ohne deren Korrektur. Dabei veranschaulicht Fig. 2 mehrere Diagramme in übereinanderliegenden Ebenen. Die rechte Kolonne der Fig. 2 zeigt die Aberrationen der Wellenfront entlang der horizontalen (x) und die linke Kolonne die Aberrationen der Wellenfront entlang der vertikalen (y) Pupillenmeridiane. Fig. 2 a) veranschaulicht die Aberrationen (optische Wegunterschiede) für Wellenlängen von 1064, 824, 811 und 798 nm bei Feldwinkeln X und Y eines relativen Feldes von 0,00° in beiden Achsrichtungen. Fig. 2 b) stellt die Aberrationen bei X = 0,00° und Y = 1,00° dar, Fig. 2 c) die Aberrationen bei X = 0,00° und Y = -1,00°, Fig. 2 d) die Aberrationen bei X = 1,00° und Y = 0,00° und Fig. 2 e) schliesslich die Aberrationen bei X = -1,00° und Y = 0,00°. Wie ersichtlich, zeigen sich Wellenfrontdeformationen von maximal 0.8 λ, was weit ausserhalb der Spezifikationen von typischerweise λ / 8 pV oder äquivalent λ / 24 rms liegt.

Diese Wellenfrontfehler können nun durch eine Zwischenschalten einer Korrekturplatte 7 mit entsprechend ausgebildeter Oberflächenstruktur vermindert werden. Dazu muss eine Optimierungsrechnung durchgeführt werden. Die Optimierung optischer Systeme gehört für einen Optikfachmann zu den beinahe täglich geforderten Aufgaben, so dass hier zunächst nicht im Detail darauf eingegangen werden muss. In jedem Falle werden für sehr viele Lichtstrahlen die optischen Weglängen von der Eintrittspupille EP am Primärspiegel 3 bis zur Austrittspupille AP berechnet und als Wellenfront dargestellt. Ihre Abweichung von der idealen Plane ist die Grösse, welche minimiert werden muss. Dies geschieht nun durch Variation aller freien Konstruktionsparameter, wie Radien, Abstände, Verkippungen, Dezentrierungen etc der Spiegel, sowie zusätzlich neu durch Variation des Oberflächenprofils der Korrekturplatte 7 bzw. (s. unten) des Reflektors 3.

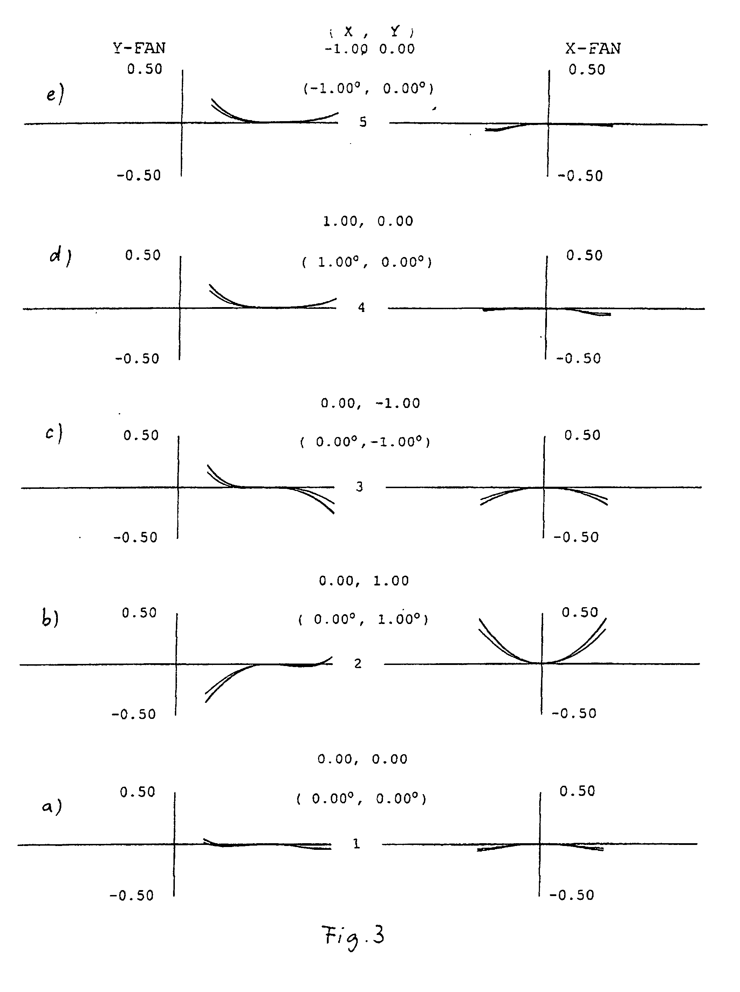

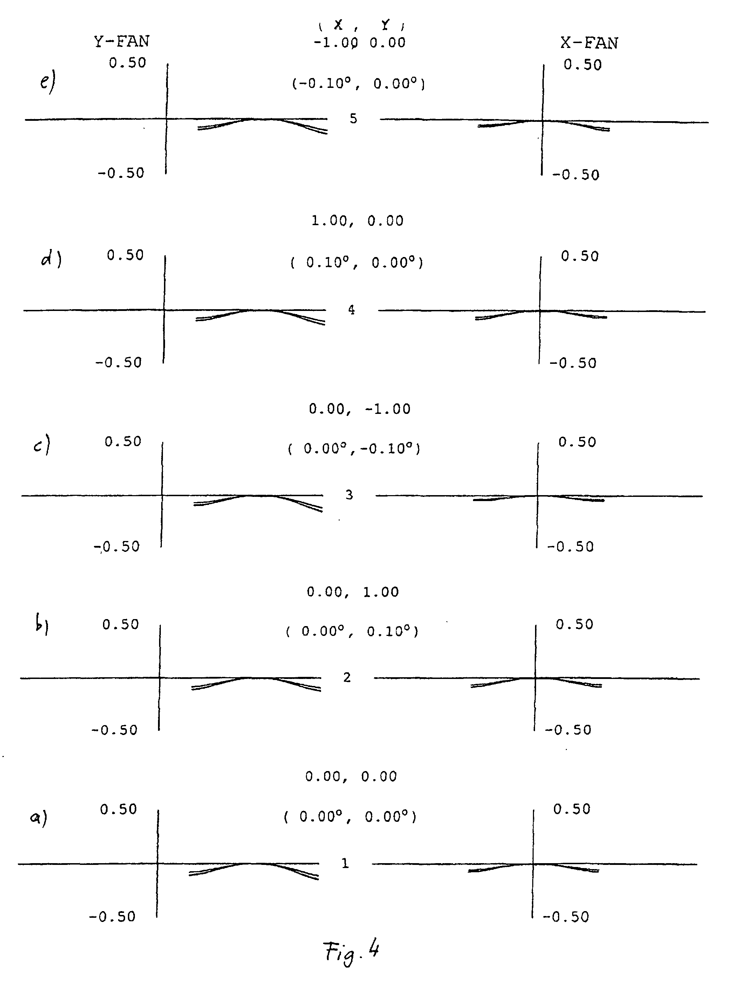

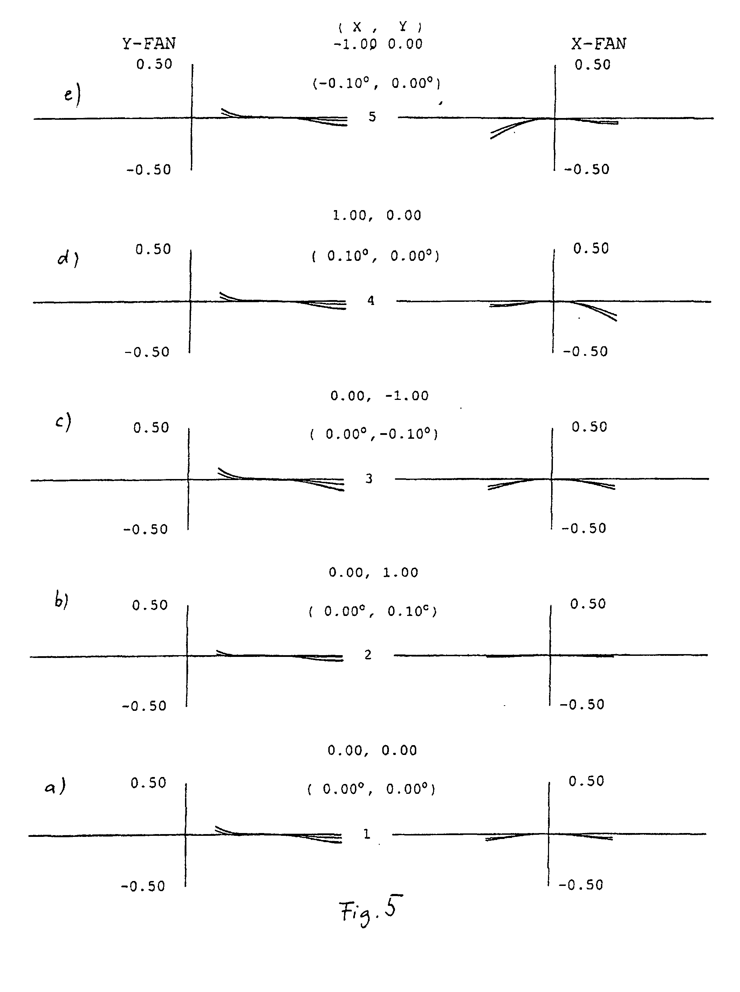

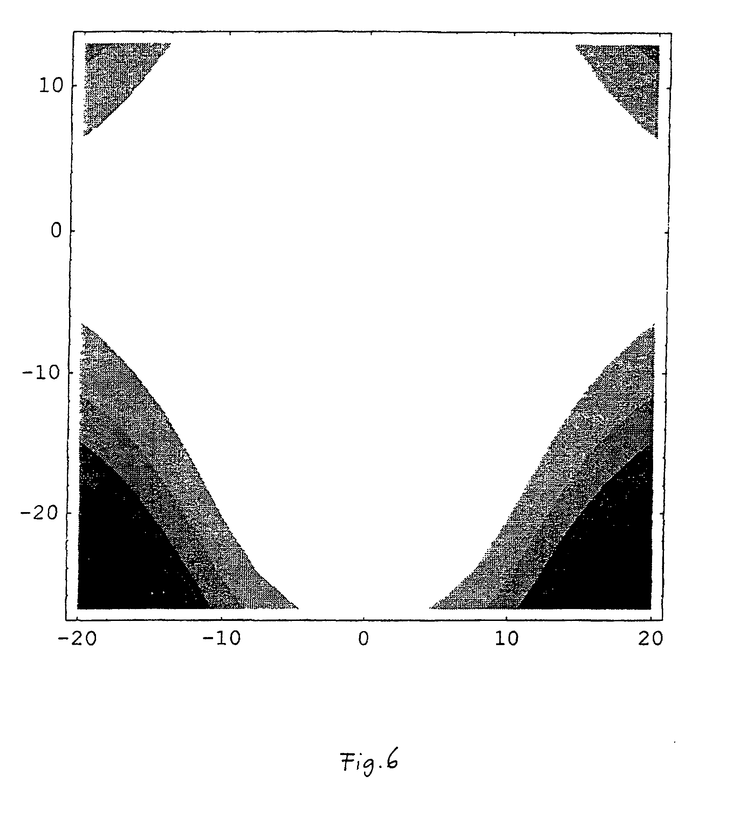

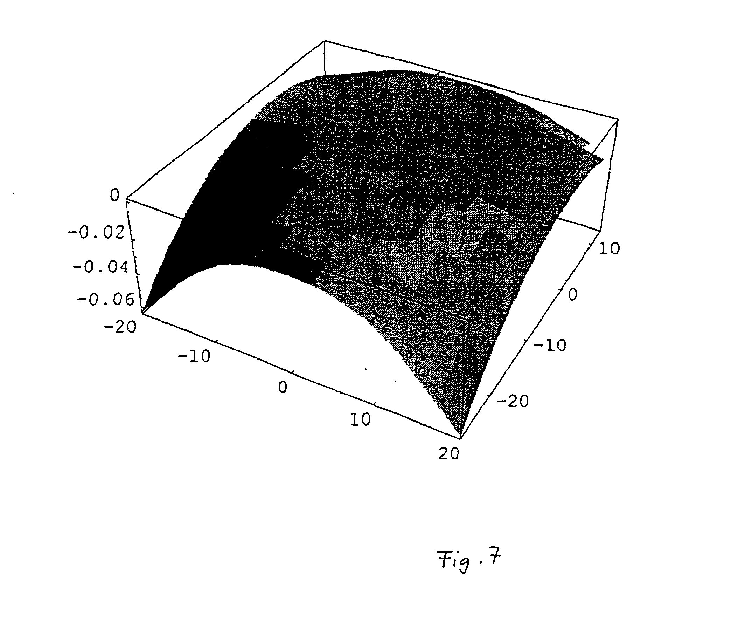

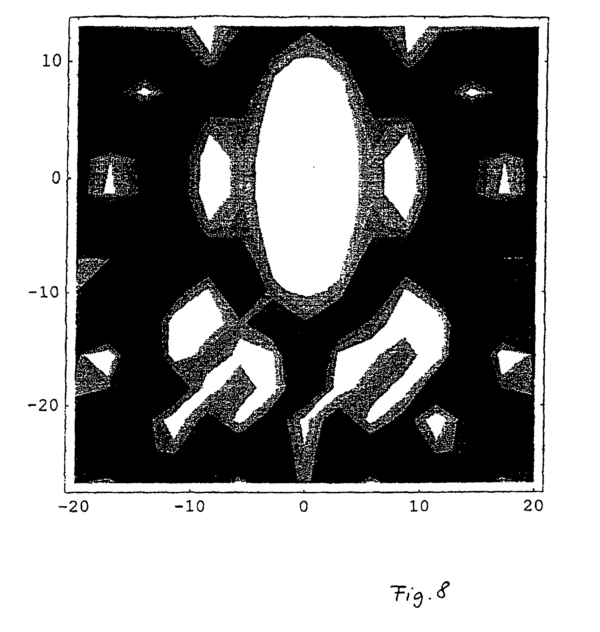

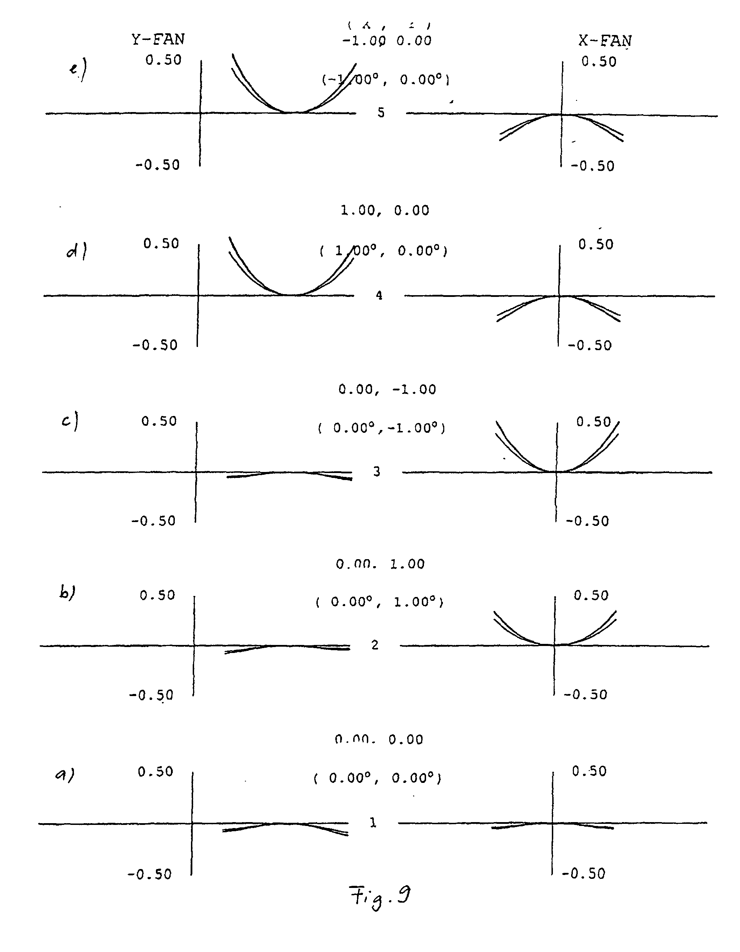

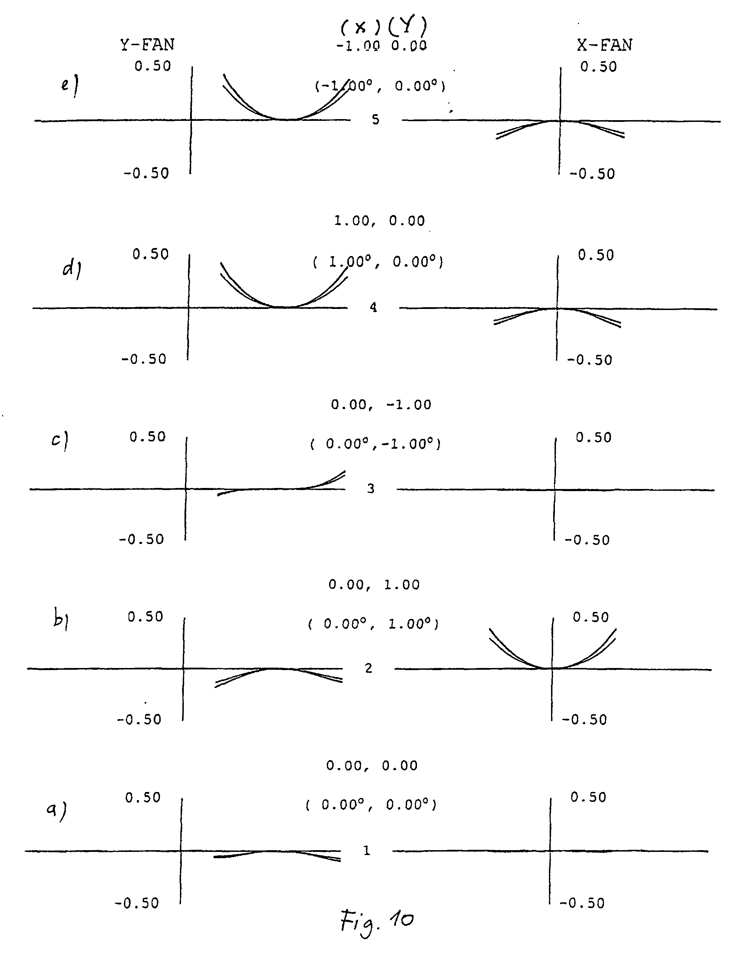

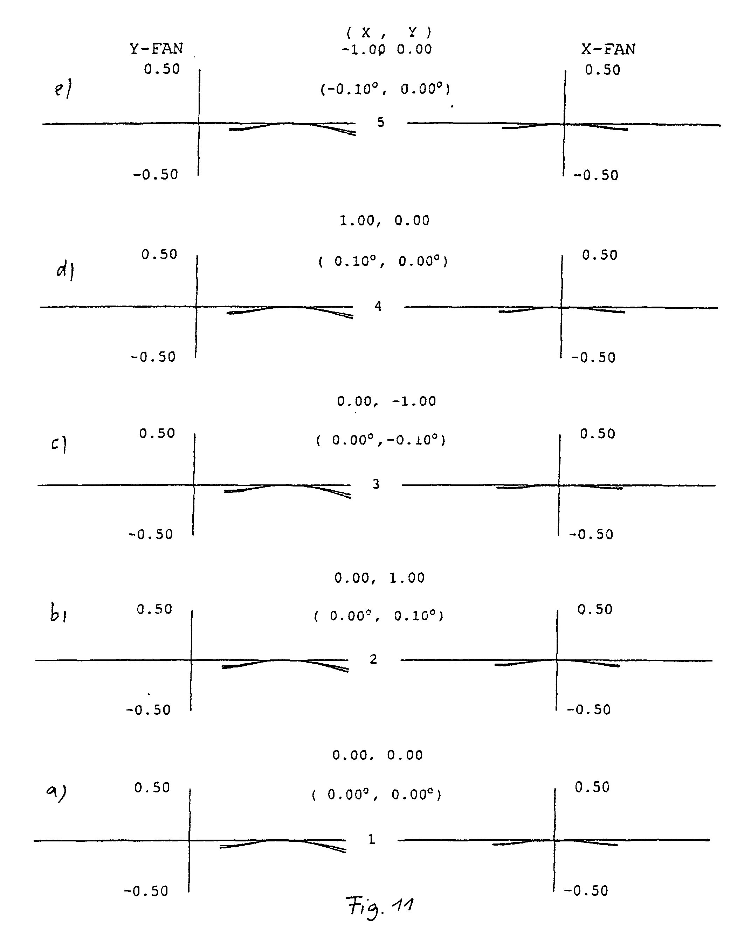

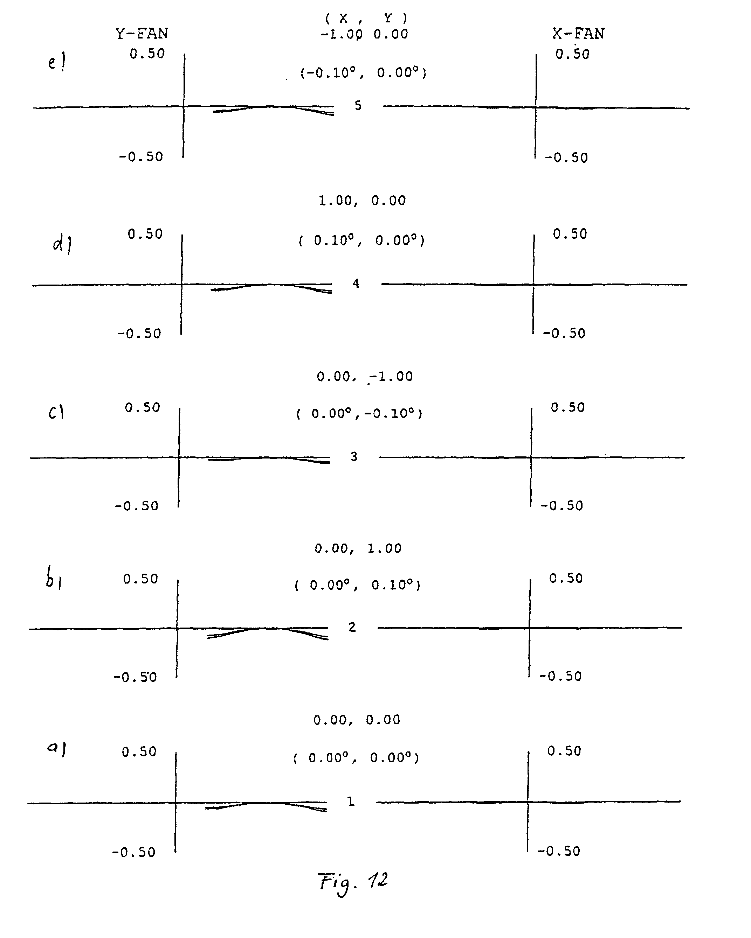

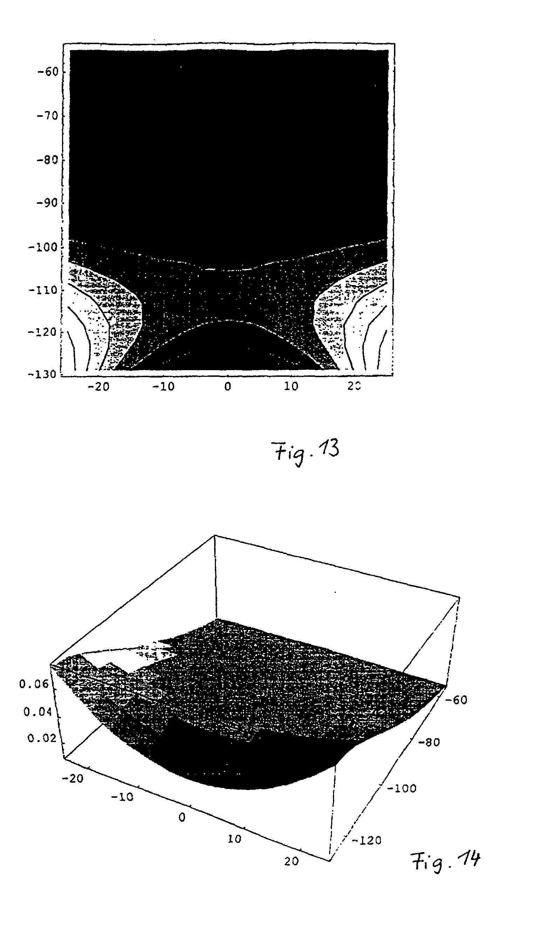

Aufgrund dieser Optimierung wird ein hinsichtlich der Anordnung der Diagramme der Fig. 2 entsprechendes Bild gemäss Fig. 3 erhalten. Ein Vergleich mit Fig. 2 zeigt, dass alle Wellenfrontaberrationen signifikant reduziert werden konnten. Ein ähnlicher Vergleich lässt sich an Hand der Fig. 4 und 5 für ein kleineres Gesichtsfeld, für den Kommunikationskanal beispielsweise, durchführen. Hier erscheint die Verbesserung auf den ersten Blick nicht so spektakulär, was daran liegt, dass das System schon vorkorrigiert war. Doch ist auch hier eine dem Fachmann erkenntliche deutliche Verbesserung gelungen, die um so mehr zählt, wenn wie beispielsweise für die Belange eines Kommunikationskanals die Spezifikationen enger sind. Zu bemerken ist, dass mit demselben Korrekturelement Verbesserungen in beiden, physikalisch verschieden definierten und spezifizierten Kanälen gelungen sind. Das Oberflächenprofil der sich so ergebenden Oberfläche der transmissiven Korrekturplatte ist in Fig. 6 und 7 (letztere in stark überhöhter Darstellung) gezeigt. Die Skaleneinteilung an der vertikalen Achse ist dabei in Millimeter angegeben.

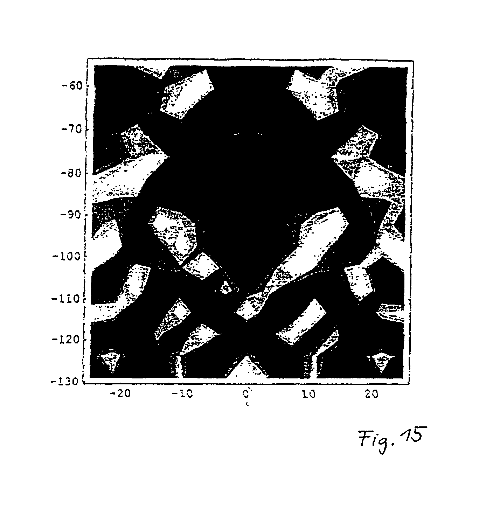

Es besteht alternativ auch die Möglichkeit, die Wellenfront nicht nur mittels Brechung, sondern auch über Beugung zu beeinflussen. Dies ist über ein besonderes optisches Element, ein Hologramm, möglich. Es wird dann in die plane Oberfläche der transmissiven Platte 7 eingearbeitet, oder als dünne Folie aufgeklebt oder aufgekittet (Transmissionshologramm) oder in analoger Weise in die plane Fläche des Reflektors 5 als Reflexionshologramm eingearbeitet. Fig. 8 zeigt die Hologrammphasenfunktion in Draufsicht für das Transmissionshologramm, Fig. 15 für ein Reflexionshologramm.

Den nachfolgenden Darstellungen der Figuren 9 bis 15 liegt ein System entsprechend Fig. 1 mit einer geringeren Vergrösserung von $\Gamma \cong 8.5$ zugrunde. Hier werden die Korrekturmassnahmen direkt am dritten Reflektor 5 vorgenommen, also ohne Zwischenschalten einer Korrekturplatte.

Dazu wird, damit die Wellenfront in gewünschter Weise modifiziert wird, eine Korrektur des an sich planen Oberflächenprofils des dritten Reflektors vorgenommen. So zeigen die Diagramme in den Fig. 9 und 10 wiederum die Wellenfront des optischen Systems im unkorrigierten und im korrigierten Zustand für ein dem Akquisitionskanal entsprechendes, grösseres Gesichtsfeld. Auch hier ist die Verbesserung deutlich zu sehen. Das Oberflächenprofil des dritten Reflektors 5 ist in Fig. 13 und 14 gezeigt, in den Darstellungen der Figuren 6 und 7 entsprechender Weise. Fig. 14 zeigt dabei die Oberflächenstruktur in perspektivischer, stark überhöhter Ansicht. In gleicher Weise, wie in Fig. 8 für eine Korrekturplatte dargestellt, kann auch die Oberfläche des dritten Reflektors mit einer Hologrammstruktur versehen sein. Eine solche Struktur ist - für die Oberfläche des dritten Reflektors 5 - aus Fig. 15 zu ersehen.

Das Oberflächenprofil kann in die Oberfläche des Reflektors 5 eingearbeitet z.B. geätzt werden, oder als eigenes, reflektierendes Bauteil auf die plane Reflektorfläche aufgeklebt oder aufgekittet werden.

Die folgenden Beispiele geben die Korrekturfunktionen für die Erstellung des Oberflächenprofils $\Delta z$ an, sei es für transmissive Korrekturplättchen, reflektive Korrekturmassnahmen an der Oberfläche des dritten Reflektors oder durch eine zusätzlich durch Beugung wirkende Korrekturmassnahme an der transmissiven Korrekturplatte. Die ausgleichende Fläche weist dabei eine Phasenstruktur auf, die durch $\Phi = (2\pi/\lambda) * a * b * \Delta z$ beschrieben ist. Dabei ist der Faktor a davon abhängig, ob es sich um eine transmittierende oder eine reflektierende Oberfläche handelt, der Faktor bestimmt b die jeweilige Einbaulage der Fläche.

Beispiel 1

Eine planparallele Glasplatte von 3 mm Dicke, die dem zweiten Reflektor zugewandt ist, wird entsprechend der Darstellung der Fig. 1 als Platte 7 in den Strahlengang gebracht. Ihr Oberflächenprofil $\Delta z$, d.h. die Tiefenabweichung von der Plane werde als Funktion der Ortskoordinaten durch ein Polynom beschrieben, insbesondere durch folgendes Polynom

$$\Delta z = AR * [(1 - AP) * x^2 + (1 + AP) * y^2]^2 +$$
$$BR * [(1 - BP) * x^2 + (1 + BP) * y^2]^3 +$$
$$CR * [(1 - CP) * x^2 + (1 + CP) * y^2]^4 +$$
$$DR * [(1 - DP) * x^2 + (1 + DP) * y^2]^5;$$

worin $\Delta z$ wie erwähnt das Tiefenrelief in mm entlang der Koordinate z (vgl. Fig. 6,7) am Ort (x,y) beschreibt und wobei x und y die aus Fig. 6,7 ersichtlichen Koordinaten senkrecht zur z-Achse sind. Die dimensionsbehafteten Koeffizienten AR-...-DR sind die rotationssymmetrischen Anteile 4., 6., 8., 10. Ordnung der Abweichung von der zugrunde liegenden konischen, hier planen, Wellenfront, während die dimensionslosen Koeffizienten AP-...-DP die entsprechenden nicht-rotationssymmetrischen Anteile beschreiben. Alle Koeffizienten sind freie Parameter der mathematischen Optimierung. Dies ergibt dann die optisch wirksame Phasenkorrekturfunktion

$$\Phi = (2\pi/\lambda) \ast (n-1) \ast \Delta z$$

unter Verwendung des Brechungsindex n der Glasplatte und der Wellenlänge $\lambda$.

Durch die Optimierung der Wellenfront ergaben sich:

| | |
|---|---|
| AR = 0,1(E-06) mm$^{-3}$; | AP = -0,61(E+00); |
| BR = 0,1(E-09) mm$^{-5}$; | BP = -0,12(E+01); |
| CR = 0,7(E-13) mm$^{-7}$; | CP = -0,12(E+01); |
| DR = 0,2(E-16) mm$^{-9}$; | DP = -0,11 (E+01); |

wobei E der Exponent ist.

Beispiel 2

Auf den dritten Reflektor 3 wurde die Strukturfunktion $\Delta z$ in die Spiegelfläche als Tiefenrelief einpoliert (Fig. 13). Die nachfolgend verwendeten Koeffizienten besitzen die in Beispiel 1 angegebene Bedeutung. Nach erfolgter Optimierung der Wellenfront ergaben sich folgende Werte:

| | |
|---|---|
| AR = 0,2 (E-10)mm$^{-3}$; | AP = 0,48(E+01); |
| BR = -0,1 (E -14)mm$^{-5}$; | BP = 0,24(E+01); |
| CR = 0,15(E-13)mm$^{-7}$; | CP = 0,93(E-01); |
| DR = 0,2 (E-23)mm$^{-9}$; | DP = -0,31(E+01); |

Dies ergibt dann die eigentliche Phasenkorrekturfunktion

$$\Phi = (2\pi/\lambda) \ast 2 \ast \cos(\vartheta) \ast \Delta z,$$

wobei $\vartheta$ den Strahlablenkwinkel relativ zur Spiegelnormale beschreibt.

Beispiel 3

Man kann die gewünschte Phasenkorrekturfunktion auch über Beugung an einer strukturierten Oberfläche erzeugen. Es gibt nun verschiedene Möglichkeiten, wie man eine beugende Struktur erzeugt: In Fig.8 wurde die Darstellung als modifizierte Fresnelplatte angewandt. Die Idee ist dabei wie folgt:
Die optische Phase in Beispiel 1 könnte auch als

$$\Phi = (2\pi/\lambda) \ast (n-1) \ast \Delta z(\text{modulo } \lambda)$$

geschrieben werden. Dann muss in die transmittierende Trägerplatte 7 nicht die Relieffunktion $\Delta z$ aus Beispiel 1, sondern die Modifikation $\Delta z(\text{modulo } \lambda)$ einpoliert werden. Bringt man eine so gestaltete Platte in den Strahlengang, so wird die Wellenfront in gleicher Weise korrigiert wie in Beispiel 1. Der Unterschied ist, dass der zugrunde liegende, physikalische Mechanismus nicht mehr allein die Reflexion, sondern auch die Beugung an diesen feinen Strukturen ist. Trotzdem gilt weiter der Ansatz, dass $\Phi$ als Funktion aus den erwähnten Koeffizienten AR..DP dargestellt werden muss.

Im Rahmen der Erfindung sind zahlreiche Abwandlungen möglich, beispielsweise könnte die Korrektur der durch die Verkippung um den Winkel $\alpha$ bewirkten Aberrationen partiell, z.B. durch zwei hintereinander im Strahlengang angeordnete Korrekturflächen erfolgen, was aber wegen der doppelten Bearbeitung nicht bevorzugt ist, obwohl sich damit gegebenenfalls eine weitere Verbesserung der Bildqualität erzielen liesse. Eine solche partielle bzw. mehrfache Korrektur könnte auch so erfolgen, dass an Stelle einer reflektierenden Folie am dritten Reflektor 5 eine transmissive auf einer Spiegelfläche des Reflektors 5 angebracht wird. In diesem Falle erfolgt eine erste Korrektur des Strahlenbündels beim ersten Durchgang durch die transmissive Folie bis zur Spiegelfläche, und eine zweite Korrektur des Strahlenbündels beim zweiten Durchgang durch die transmissive Folie nach Reflexion an der Spiegelfläche des Reflektors 5. Natürlich ist dann die Korrektur entsprechend zu berechnen.

**Patentansprüche**

1. Teleskop mit einem Strahlengang, der folgendes umfasst:

- ein entlang seiner Achse (A) angeordnetes erstes Reflektorelement (3) zum Reflektieren eines entlang einer optischen Achse (O) einfallenden Strahlenbündels (1) auf

- ein konvexes zweites Reflektorelement (4), welches das vom ersten Reflektorelement (3) erhaltene Strahlenbündel auf

- ein drittes Reflektorelement (5) wirft, von dem aus es

- einem konkaven vierten Reflektorelement (6) zugeführt wird, um unter einem Winkel zur genannten optischen Achse (O) ausgespiegelt zu werden,

wobei die Achse (A) des ersten Reflektorelements (3) mit der optischen Achse (O) einen von 0° abweichenden Winkel ($\alpha$) - insbesondere von etwa 1° - einschliesst, und
wobei eine Korrektureinrichtung vorgesehen ist, welche eventuelle Phasenunterschiede der optischen Wellenfront zwischen Eintrittspupille (EP) und Austrittspupille (AP) des Teleskops durch mindestens eine die Phase beeinflussende Fläche (5,7) im Strahlengang ausgleicht,

wobei die die Phasenunterschiede ausgleichende Fläche (5,7) in oder nahe einer Zwischenbildebene (Z) oder der Pupillenebene der Austrittspupille (AP) angeordnet ist, und

wobei die die Phasenunterschiede ausgleichende Fläche (5,7) reflektierend oder transmissiv, gegebenenfalls beugend, ist und eine Phasenstruktur $\Phi = (2\pi/\lambda) * a * b * \Delta z$ bzw. $\Phi = (2\pi/\lambda) * a * b * \Delta z(\text{modulo } \lambda)$ aufweist,

worin $\Delta z$ bzw. $\Delta z(\text{modulo } \lambda)$ das Tiefenprofil in mm entlang einer Koordinate z an einem Ort (x,y) beschreibt, wobei a = (n-1) für eine transmittierende, bzw. a = 2 für eine reflektierende Fläche ist, während b ein Geometriefaktor ist, der die Einbaulage der Fläche bestimmt, und

wobei das Tiefenprofil $\Delta z$ bzw. $\Delta z(\text{modulo } \lambda)$ so berechnet wird, dass durch die Phasenstruktur $\Phi$ die Unterschiede der optischen Wellenfront zwischen Eintrittspupille (EP) und Austrittspupille (AP) minimiert werden, und

wobei $\Delta z$ durch ein Polynom

$$\Delta z = AR * [(1 - \Delta P) * x^2 + (1 + AP) * y^2]^2 +$$

$$BR * [(1 - BP) * x^2 + (1 + BP) * y^2]^3 +$$

$$CR * [(1 - CP) * x^2 + (1 + CP) * y^2]^4 +$$

$$DR * [(1 - DP) * x^2 + (1 + DP) * y^2]^5;$$

beschrieben wird, wobei

- x und y die Koordinaten senkrecht zur z-Achse sind,
- die dimensionsbehafteten Koeffizienten AR-...-DR die rotationssymmetrischen Anteile 4., 6., 8., 10. Ordnung der Abweichung von der zugrunde liegenden konischen Wellenfront beschreiben,
- während die dimensionslosen Koeffizienten AP-...-DP die entsprechenden nicht-rotationssymmetrischen Anteile beschreiben und
- wenigstens einer der Koeffizienten AP-...-DP sowie der jeweils der gleichen Ordnung zugeordnete Koeffizient der Koeffizienten AR-...-DR ungleich Null sind.

2. Teleskop nach Anspruch 1, **dadurch gekennzeichnet, dass** der Winkel ($\alpha$) zwischen der Achse (A) des ersten Reflektorelements (3) und der optischen Achse (O) des einfallenden Strahlenbündels (1) weniger als 30° beträgt, vorzugsweise weniger als 10°, insbesondere weniger als 5°.

3. Teleskop nach einem der Ansprüche 1 oder 2, **dadurch gekennzeichnet, dass** die Korrektureinrichtung (5,7) dem dritten Reflektorelement (5) zugeordnet ist.

4. Teleskop nach einem der vorangehenden Ansprüche, **dadurch gekennzeichnet, dass** der Parentspiegel des ersten Reflektorelements (3) eine F-Zahl besitzt, die grösser 1, vorzugsweise grösser als 1,5, ist und insbesondere um $2 \pm 0,3$ liegt.

5. Teleskop nach einem der vorangehenden Ansprüche, **dadurch gekennzeichnet, dass** der Parentspiegel des zweiten Reflektorelements (4) eine F-Zahl besitzt, die grösser als 1, vorzugsweise grösser als 1,5, ist und insbesondere um $2 \pm 0,3$ liegt.

6. Teleskop nach einem der vorangehenden Ansprüche, **dadurch gekennzeichnet, dass** auch die Achse (A') des zweiten Reflektorelements (4) mit der optischen Achse (O) einen von 0° abweichenden Winkel ($\beta$) einschliesst und vorzugsweise die Winkel der Achsen (A, bzw. A') des ersten und zweiten Reflektorelements (3 bzw. 4) zur optischen Achse (O) des einfallenden Strahlenbündels (1) im wesentlichen gleich gross sind und/oder der Winkel ($\beta$) zwischen der Achse (A') des zweiten Reflektorelements (4) und der optischen Achse (O) des einfallenden Strahlenbündels (1) weniger als 30° beträgt, vorzugsweise weniger als 10°, insbesondere weniger als 5°, z.B. etwa 1°.

**Claims**

1. Telescope having a beam path which comprises the following:

- a first reflector element (3) arranged along its axis (A) and intended for reflecting a pencil (1) of rays which is incident along an optical axis (O)
- a convex second reflector element (4) which throws the pencil of rays which is obtained from the first reflector element (3) onto
- a third reflector element (5), from which it
- is passed to a concave fourth reflector element (6) to be reflected at an angle to said optical axis (O), the axis (A) of the first reflector element (3) making an angle ($\alpha$) differing from 0° - in particular of about 1° - with the optical axis (O), and

a correction means which compensates any phase differences of the optical wavefront between entry pupil (EP) and exit pupil (AP) of the telescope by at least one phase-influencing surface (5, 7) in the beam path being provided,

the surface (5, 7) compensating the phase differences being arranged in or close to an intermediate image plane (Z) or the pupil plane of the exit pupil (AP), and

the surface (5, 7) compensating the phase differences being reflective or transmitting, optionally diffracting, and having a phase structure $\phi = (2\pi/\lambda).a.b.\Delta z$ or $\phi = (2\pi/\lambda).a.b.\Delta z$(modulo $\lambda$),

in which $\Delta z$ or $\Delta z$(modulo $\lambda$) describes the depth profile in mm along a coordinate z at a location (x, y), where a = (n-1) for a transmitting surface and a = 2 for a reflecting surface, while b is a geometric factor which determines the installation position of the surface, and

the depth profile $\Delta z$ or $\Delta z$(modulo $\lambda$) being calculated so that the differences of the optical wavefront between entry pupil (EP) and exit pupil (AP) are minimized by the phase structure $\phi$, and

$\Delta z$ being described by a polynomial

$$\Delta z = AR.[(1 - AP).x^2 + (1 + AP).y^2]^2 +$$
$$BR.[(1 - BP).x^2 + (1 + BP).y^2]^3 +$$
$$CR.[(1 - CP).x^2 + (1 + CP).y^2]^4 +$$
$$DR.[(1 - DP).x^2 + (1 + DP).y^2]^5;$$

- x and y are the coordinates perpendicular to the z axis,
- the dimensioned coefficients AR-...-DR describe the rotationally symmetrical 4th, 6th, 8th and 10th order components of the deviation from the basic conical wavefront,
- while the dimensionless coefficients AP-...-DP describe the corresponding components which are not rotationally symmetrical and
- at least one of the coefficients AP-...-DP and that coefficient of the coefficients AR-...-DR which is coordinated in each case with the same order are not equal to zero.

2. Telescope according to Claim 1, **characterized in that** the angle ($\alpha$) between the axis (A) of the first reflector element (3) and the optical axis (O) of the incident pencil (1) of rays is less than 30°, preferably less than 10°, in particular less than 5°.

3. Telescope according to either of Claims 1 and 2, **characterized in that** the correction means (5, 7) is coordinated with the third reflector element (5).

4. Telescope according to any of the preceding Claims, **characterized in that** the parent mirror of the first reflector element (3) has a F number which is greater than 1, preferably greater than 1.5, and is in particular 2 ± 0.3.

5. Telescope according to any of the preceding Claims, **characterized in that** the parent mirror of the second reflector element (4) has a F number which is greater than 1, preferably greater than 1.5, and in particular is 2 ± 0.3.

6. Telescope according to any of the preceding Claims, **characterized in that** the axis (A') of the second reflector element (4) also makes an angle ($\beta$) differing from 0° with the optical axis (O) and preferably the angles of the axes (A and A') of the first and second reflector elements (3 and 4, respectively) with the optical axis (O) of the incident pencil (1) of rays are substantially of the same magnitude and/or the angle ($\beta$) between the axis (A') of the second reflector element (4) and the optical axis (O) of the incident pencil (1) of rays is less than 30°, preferably less than 10°, in particular less than 5°, e.g. about 1°.

**Revendications**

1. Télescope avec un chemin de rayons, comprenant les éléments ci-après :

   - un premier élément réflecteur (3), disposé le long de son axe (A) pour réfléchir un faisceau de rayons (1) incident le long d'un axe optique (O)
   - un deuxième élément réflecteur (4) convexe, projetant le faisceau de rayons, obtenu du premier élément réflecteur (3), sur
   - un troisième élément réflecteur (5), d'où
   - il est amené à un quatrième élément réflecteur (6) concave, pour être réfléchi sous un certain angle par rapport à l'axe optique (O) cité,

   l'axe (A) du premier élément réflecteur (3) faisant, avec l'axe optique (O), un angle ($\alpha$) différent de 0° - en particulier d'environ 1° -, et un dispositif correcteur étant prévu, qui compense les éventuels déphasages du front d'ondes optique entre la pupille d'entrée (EP) et la pupille de sortie (AP) du télescope par au moins une face (5, 7) influant sur la phase, dans le chemin des rayons, la face (5, 7) compensant les déphases étant disposée dans ou à proximité d'un plan image intermédiaire (Z), ou du plan de pupille de la pupille de sortie (AP), et la surface (5, 7) compensant les déphasages étant de nature réfléchissante ou transmissive, le cas échéant diffractive, et présentant une structure de phase $\Phi = (2\pi/\lambda)$ respectivement $\Phi = (2\pi/\lambda) \Delta z$(modulo $\lambda$), où $\Delta z$, respectivement $\Delta z$(modulo $\lambda$), décrit le profil en profondeur exprimé en millimètre le long d'une coordonnée z sur un site (x, y), où a = (n-1) caractérise une surface transmissive, respectivement a = 2 caractérise une surface réfléchissante, tandis que b est un facteur géométrique déterminant la position à l'état monté de la surface, et

le profil en profondeur Δz, respectivement Δz(modulo λ), étant calculé de manière que, au moyen de la structure de phase Φ, on minimise les différences des front d'ondes optiques entre la pupille d'entrée (EP) et la pupille de sortie (AP), et

où Δz est décrit par un polynôme

$$\Delta z = AR \cdot [(1 - AP) \cdot x^2 + (1 + AP) \cdot y^2]^2 +$$
$$BR \cdot [(1 - BP) \cdot x^2 + (1 + BP) \cdot y^2]^3 +$$
$$CR \cdot [(1 - CP) \cdot x^2 + (1 + CP) \cdot y^2]^4 +$$
$$DR \cdot [(1 - DP) \cdot x^2 + (1 + DP) \cdot y^2]^5 \ ;$$

où

- x et y sont les coordonnées perpendiculairement à l'axe z,
- les coefficients dimensionnels AR-...-DR décrivent les fractions, des 4ème, 6ème, 8ème, 10ème ordres, répondant à une symétrie de rotation, de l'écart par rapport au front d'ondes conique pris comme base,
- tandis que les coefficients sans dimension AP-...-DP décrivent les proportions correspondantes, ne répondant pas à une symétrie de rotation, et
- au moins l'un des coefficients AP-...-DP, ainsi que le coefficient, chaque fois associé du même ordre des coefficients AR-...-DR, sont différent de zéro.

2. Télescope selon la revendication 1, **caractérisé en ce que** l'angle (α) entre l'axe (A) du premier élément réflecteur (3) et l'axe optique (O) du faisceau de rayons (1) incident est inférieur à 30°, de préférence inférieur à 10°, de préférence inférieur à 5°.

3. Télescope selon l'une des revendications 1 ou 2, **caractérisé en ce que** le dispositif correcteur (5, 7) est associé au troisième élément réflecteur (5).

4. Télescope selon l'une des revendications précédentes, **caractérisé en ce que** le miroir de Parent du deuxième élément réflecteur (3) a un indice F supérieur à 1, de préférence supérieur à 1,5 et, en particulier, de 2 ± 0,3.

5. Télescope selon l'une des revendications précédentes, **caractérisé en ce que** le miroir de parent du deuxième élément réflecteur (4) a un indice F supérieur à 1, de préférence supérieur à 1,5 et en particulier de 2 ± 0,3.

6. Télescope selon l'une des revendications précédentes, **caractérisé en ce qu'**également l'axe (A') du deuxième élément réflecteur (4) fait, avec l'axe optique (0) un angle (β) différent de 0° et, de préférence, les angles des axes (A, respectivement A') du premier et du deuxième élément réflecteur (3, respectivement 4), par rapport à l'axe optique (O) du faisceau de rayon (1) incident, sont sensiblement de même valeur et/ou l'angle (β), entre l'axe (A') du deuxième élément réflecteur (4) et l'axe optique (O) du faisceau de rayons (1) incident, est inférieur à 30°, de préférence inférieur à 10°, en particulier inférieur à 5°, par exemple d'environ 1°.

Fig. 1

EP 1 072 922 B1

Fig. 2

Fig.3

Y-FAN
0.50

( X , Y )
-1.00 0.00

X-FAN
0.50

e)

(-0.10°, 0.00°)

5

-0.50

-0.50

1.00, 0.00

d)     0.50

( 0.10°, 0.00°)

0.50

4

-0.50

-0.50

0.00, -1.00

c)     0.50

( 0.00°, -0.10°)

0.50

3

-0.50

-0.50

0.00, 1.00

b)     0.50

( 0.00°, 0.10°)

0.50

2

-0.50

-0.50

0.00, 0.00

a)     0.50

( 0.00°, 0.00°)

0.50

1

-0.50

-0.50

Fig. 4

Y-FAN
(  X ,   Y )
-1.00  0.00
X-FAN

0.50

(-0.10°,  0.00°)

e)

5

0.50

-0.50

-0.50

1.00,  0.00

d)
0.50

( 0.10°,  0.00°)

0.50

4

-0.50

-0.50

0.00,  -1.00

c)
0.50

( 0.00°, -0.10°)

0.50

3

-0.50

-0.50

0.00,  1.00

b)
0.50

( 0.00°,  0.10°)

0.50

2

-0.50

-0.50

0.00,  0.00

a)
0.50

( 0.00°,  0.00°)

0.50

1

-0.50

-0.50

Fig. 5

Fig.6

Fig . 7

Fig. 8

Fig. 9

*Fig. 10*

Fig. 11

Fig. 12

Fig. 13

Fig. 14

Fig. 15